# EUROPÄISCHE PATENTSCHRIFT

(11) **EP 2 545 369 B1**
(45) Veröffentlichungstag und Bekanntmachung des Hinweises auf die Patenterteilung: **30.05.2018**
(21) Anmeldenummer: 11714500.3
(22) Anmeldetag: 14.03.2011
(51) Int. Cl.: G01N 29/02, G01N 29/22, F04B 19/00, F04D 33/00, G01F 1/28, B01L 3/00, B82Y 30/00

(54) **VORRICHTUNG ZUM ERZEUGEN UND/ODER NACHWEISEN EINER STRÖMUNG IN EINEM MEDIUM**
APPARATUS FOR PRODUCING AND/OR DETECTING A FLOW IN A MEDIUM
DISPOSITIF POUR LA PRODUCTION ET/OU LA DÉTECTION DE LA PRÉSENCE D'UN COURANT DANS UN MILIEU

(30) Priorität: 12.03.2010 DE 102010011706
(43) Veröffentlichungstag der Anmeldung: 16.01.2013
(73) Patentinhaber: Hochschule für angewandte Wissenschaften Fachhochschule Coburg, 96450 Coburg (DE)
(72) Erfinder: LINDNER, Gerhard, 96450 Coburg (DE); FRIEDRICH, Denise, 96274 Itzgrund (DE)
(74) Vertreter: Maikowski & Ninnemann Patentanwälte Partnerschaft mbB
(86) Internationale Anmeldenummer: PCT/EP2011/053769
(87) Internationale Veröffentlichungsnummer: WO 2011/110690

(56) Entgegenhaltungen:
- WO-A1-2009/013705
- WO-A1-2009/150585
- US-A1- 2008 170 936
- US-B1- 7 651 673
- RENAUDIN A ET AL: "SAW nanopump for handling droplets in view of biological applications", SENSORS AND ACTUATORS B, ELSEVIER SEQUOIA S.A., LAUSANNE, CH, Bd. 113, Nr. 1, 17. Januar 2006 (2006-01-17), Seiten 389-397, XP025111740, ISSN: 0925-4005, DOI: DOI:10.1016/J.SNB.2005.03.100 [gefunden am 2006-01-17]

## Beschreibung

Die Erfindung betrifft eine Vorrichtung zum Erzeugen und/oder Nachweisen einer Strömung in einem Medium gemäß Anspruch 1.

Aus dem Stand der Technik sind mikromechanische Vorrichtungen zum Erzeugen von Flüssigkeitsströmungen in Kanälen mit Abmessungen im Mikrometerbereich bekannt. Insbesondere kommen derartige Vorrichtungen in chipintegrierten Analysesystemen ("Lab-on-Chip") zum Einsatz. Zum Erzeugen der Flüssigkeitsströmung werden zum Beispiel elektrostatisch bewegte künstliche Zilien verwendet; vgl. z.B. den Artikel "Artificial cilia for active micro-fluidic mixing", J.D. den Toonder et. al., Lab on a Chip, Volume 8, Nr. 4, S. 501. Darüber hinaus offenbaren auch die WO 2009/013705 A1 und der Artikel "SAW nanopump for handling droplets in view of biological applications", Renaudin et al., Sensors and Actuators B, Elsevier Sequoia S.A., Lausanne, Bd. 113, Nr. 1, 17. Januar 2006, Seiten 389-397 Vorrichtungen zum Erzeugen einer Flüssigkeitsströmung unter Verwendung von akustischen Oberflächenschallwellen.

Das der vorliegenden Erfindung zugrunde liegende Problem besteht darin, eine möglichst einfache und möglichst effiziente Vorrichtung zum Erzeugen und/oder Nachweisen einer Strömung in einem Medium bereitzustellen. Dieses Problem wird durch die Vorrichtung mit den Merkmalen gemäß Anspruch 1 gelöst. Weiterbildungen der Erfindung sind den abhängigen Ansprüchen angegeben.

Danach wird eine Vorrichtung zum Erzeugen und/oder Nachweisen einer Strömung in einem Medium bereitgestellt, mit
- einem Trägerelement, das in Kontakt mit dem Medium bringbar ist;
- einer Mehrzahl von bewegbaren Strukturen, die an einer Oberfläche des Trägerelements angeordnet sind, wobei das Trägerelement so in Bezug auf das Medium anzuordnen ist, dass die bewegbaren Strukturen in das Medium hineinragen;
- einem Transmitter zum Erzeugen von akustischen Oberflächenwellen in dem Trägerelement, wobei in dem Trägerelement angeregte Oberflächenwellen die Trägerelementoberfläche, an der die bewegbaren Strukturen angeordnet sind, und somit die bewegbaren Strukturen abwechselnd in eine Bewegung mit einer Komponente in einer ersten Richtung und in eine Bewegung mit einer Komponente in einer zur ersten Richtung entgegengesetzten zweiten Richtung versetzen.

Die bewegbaren Strukturen sind so beschaffen und angeordnet, dass sie bei einer Bewegung der Trägerelementoberfläche mit einer Komponente in der ersten Richtung eine von dem Medium ausgeübte Gegenkraft erfahren, aufgrund derer sich die Form der bewegbaren Strukturen so verändert, dass sich ihr Strömungswiderstand vergrößert. Somit wird bei Anregung von Oberflächenwellen in dem Trägerelement über die bewegbaren Strukturen in der ersten Richtung eine größere Kraft auf das Medium übertragen und/oder ein größeres Volumen des Mediums bewegt als in der zweiten Richtung, so dass in dem Medium eine (effektive) Strömung in der ersten Richtung und/oder eine Bewegung des Trägerelements (in der zweiten Richtung) erzeugt oder verändert wird.

Die bewegbaren (insbesondere biegbaren) Strukturen sind demnach so ausgebildet, dass sie eine asymmetrische Bewegung ausführen. Insbesondere verformen sie sich bei einer abwechselnden Bewegung (hervorgerufen durch eine entsprechende Bewegung der Abschnitte der Trägerelementoberfläche, an denen sie angeordnet sind) mit einer Komponente in der ersten Richtung (Vorwärtsbewegung) und mit einer Komponente in der zweiten Richtung (Rückwärtsbewegung) derart, dass sich ihr Strömungswiderstand abwechselnd vergrößert und verkleinert, d.h. während einer ersten Halbperiode der Oberflächenwellen, während der die bewegbaren Strukturen eine Bewegung mit einer Komponente in der ersten Richtung ausführen, weisen die bewegbaren Strukturen einen größeren Strömungswiderstand (bezogen auf eine Strömung entgegen der ersten Richtung) auf als bei einer Bewegung mit einer Komponente in der entgegengesetzten zweiten Richtung (bezogen auf eine Strömung entgegen der zweiten Richtung), d.h. während einer zweiten Halbperiode der Oberflächenwellen.

Bei dem Medium handelt es sich insbesondere um eine Flüssigkeit (die z.B. auch feste Partikel enthalten kann) oder um einen weichen Feststoff. Es ist jedoch auch möglich, die erfindungsgemäße Vorrichtung zum Erzeugen einer Strömung in einem Gas zu verwenden. Darüber hinaus ist es denkbar, die erfindungsgemäße Vorrichtung zusätzlich oder alternativ zum Erzeugen von Strömungen zum Nachweis von Strömungen einzusetzen. Dies ist insbesondere dadurch möglich, dass eine Strömung entlang der Trägerelementoberfläche eine Bewegung der bewegbaren Elemente hervorruft, die die Ausbreitung der Oberflächenwellen in dem Trägerelement beeinflussen kann.

Eine Bewegung der bewegbaren Strukturen bzw. von Abschnitten der Trägerelementoberfläche mit einer Komponente "in der ersten Richtung" bedeutet insbesondere, dass diese Bewegung noch eine Komponente in einer zur ersten Richtung senkrechten Richtung haben kann, aber nicht unbedingt haben muss. Analog ist die Formulierung "Bewegung mit einer Komponente in der zweiten Richtung" zu verstehen.

Durch diese asymmetrische Bewegung der bewegbaren Strukturen erfolgt eine asymmetrische Wechselwirkung der bewegbaren Strukturen mit dem Medium, so dass ein größerer Kraftübertrag (oder Impulsübertrag) in der ersten Richtung erfolgt und/oder eine größere Menge des Mediums in der ersten Richtung bewegt wird als in der zweiten Richtung, wodurch eine Nettoströmung des Mediums in der ersten Richtung entsteht bzw. eine Nettogegenkraft entgegen der ersten Richtung (d.h. in der zweiten Richtung) auf das Trägerelement wirkt, die als Antrieb für das Trägerelement bzw. für ein mit dem Trägerelement verbundenes Objekt wirkt.

Gemäß der Erfindung weisen die bewegbaren Strukturen in Bezug auf eine vom Medium bei einer Bewegung der bewegbaren Strukturen mit einer Komponente in der ersten Richtung ausgeübte Gegenkraft (die der ersten Richtung entgegengesetzt gerichtet ist) eine höhere Biegesteifigkeit auf als in Bezug auf eine vom Medium bei einer Bewegung der bewegbaren Strukturen mit einer Komponente in der zweiten Richtung ausgeübte Gegenkraft. Diese asymmetrische Biegesteifigkeit der bewegbaren Strukturen wird durch eine entsprechende Form der bewegbaren Strukturen erzeugt. So sind die bewegbaren Strukturen - bezogen auf den Ruhezustand des Trägerelementes, d.h. ohne, dass akustische Wellen in dem Trägerelement angeregt sind - gekrümmt und/oder vorgespannt ausgebildet und an dem Trägerelement angeordnet.

Insbesondere sind die bewegbaren Strukturen so beschaffen, dass eine auf sie vom Medium bei einer Bewegung mit einer Komponente in der ersten Richtung ausgeübte Gegenkraft jeweils eine Vergrößerung ihrer Ausdehnung senkrecht zur Trägerelementoberfläche und eine bei einer Bewegung mit einer Komponente in der entgegengesetzten zweiten Richtung auf sie wirkende Gegenkraft eine Verkleinerung ihrer Ausdehnung senkrecht zur Trägerelementoberfläche bewirkt

Es wird darauf hingewiesen, dass die Trägerelementoberfläche nicht unbedingt plan verlaufen muss, sondern es ist denkbar, dass sie sich auch im Ruhezustand des Trägerelementes etwas uneben erstreckt, d.h. die Trägerelementoberfläche erstreckt sich entlang einer Haupterstreckungsebene, entlang der sie eine größere Ausdehnung (insbesondere mindestens dreimal größer) besitzt als in einer Richtung senkrecht zur Haupterstreckungsebene. Darüber hinaus ist auch denkbar, dass das Trägerelement eine sich im Raum erstreckende Struktur ist, d.h. z.B. dass die Trägeroberfläche gekrümmte und/oder geknickte Abschnitte aufweist. Beispielsweise handelt es sich bei dem Trägerelement um ein hohlzylindrisches Element, wobei die Trägerelementoberfläche, an der die bewegbaren Strukturen angeordnet sind, durch eine Innenfläche dieses Hohlzylinders ausgeformt wird. Die bewegbaren Strukturen sind so beschaffen dass sie sich aufgrund einer auf sie vom Medium bei einer Bewegung mit einer Komponente in der ersten Richtung ausgeübten Gegenkraft strecken und aufgrund einer auf sie bei einer Bewegung mit einer Komponente in der entgegengesetzten zweiten Richtung auf sie wirkenden Gegenkraft einkrümmen (oder einfalten).

Durch die in dem Trägerelement angeregten Oberflächenwellen kommt es insbesondere zu einer elliptischen retrograden Bewegung der Abschnitte der Trägerelementoberfläche, an denen die bewegbaren Strukturen angeordnet sind, um die Ruhelage der Trägerelementoberfläche. Hierdurch führen diese Abschnitte der Trägerelementoberfläche (und entsprechend die an ihnen festgelegten bewegbaren Strukturen) eine Bewegung aus, die eine transversale Bewegung in einer Sagittalebene (d.h. mit einer Komponente senkrecht zur Ausbreitungsrichtung der Oberflächenwellen bzw. senkrecht zur Trägerelementoberfläche in Ruhelage) und gleichzeitig eine longitudinale Bewegung in Ausbreitungsrichtung der Oberflächenwellen, d.h. parallel zur Trägerelementoberfläche in Ruhelage, umfasst.

Mit anderen Worten umfasst die Bewegung der Trägerelementoberfläche eine (longitudinale) Hin- und Herbewegung, d.h. eine abwechselnde Bewegung der Trägerelementoberfläche mit einer parallel zur Trägerelementoberfläche gerichteten Komponente (Komponente in der ersten Richtung) und einer parallel zur Trägerelementoberfläche gerichteten Komponente in der entgegengesetzten Richtung (Komponente in der zweiten Richtung). Der Transmitter ist insbesondere so ausgestaltet, dass er in dem Trägerelement Oberflächenwellen in Form von Lamb-Wellen, Rayleigh-Wellen oder Lamb-Rayleigh-Wellen erzeugt, die die beschriebene elliptische retrograde Bewegung der Trägerelementoberfläche hervorrufen.

Durch den unterschiedlichen Strömungswiderstand der bewegbaren Strukturen bei einer Bewegung mit einer Komponente in der ersten Richtung und bei einer Bewegung mit einer Komponente in der zweiten Richtung, üben die bewegbaren Strukturen jeweils abwechselnd eine erste Kraft mit einer Komponente in der ersten Richtung (die insbesondere parallel zur Trägerelementoberfläche gerichtet ist) und eine zweite Kraft mit einer Komponente in der zweiten Richtung (die insbesondere ebenfalls parallel zur Trägerelementoberfläche gerichtet ist) auf das Medium auf.

Beispielsweise wird die erste Kraft auf das Medium übertragen, wenn die Abschnitte der Trägerelementoberfläche, an denen die bewegbaren Strukturen angeordnet (festgelegt) sind, jeweils durch die in dem Trägerelement angeregten akustischen Oberflächenwellen zum Medium hin oder vom Medium weg ausgelenkt werden (und insbesondere aufgrund der oben erwähnten retrograden Bewegung der Trägerelementoberfläche gleichzeitig eine Bewegung dieser Abschnitte der Trägerelementoberfläche in der ersten Richtung erfolgt). Entsprechend wird die zweite Kraft auf das Medium übertragen, wenn die Abschnitte der Trägerelementoberfläche, an denen die bewegbaren Strukturen festgelegt sind, umgekehrt vom Medium weg oder zum Medium hin ausgelenkt werden.

Gemäß einer weiteren Ausgestaltung der Erfindung sind die bewegbaren Strukturen länglich (z.B. haarförmig) ausgebildet und jeweils mit einem Ende an der Oberfläche des Trägerelementes festgelegt. Insbesondere ist das Ende der bewegbaren Strukturen jeweils mit der Trägerelementoberfläche stoffschlüssig verbunden, z.B. mit der Oberfläche des Trägerelementes verklebt oder verschweißt. Das jeweils andere Ende (das freie Ende) der bewegbaren Strukturen ragt bei bestimmungsgemäßer Benutzung der Vorrichtung dann in das Medium hinein.

Die bewegbaren Elemente werden insbesondere per Mikro- und/oder Nanostrukturierung z.B. durch partielles Abtragen der Oberfläche des Trägerelementes und/oder Aufbringen von Material hergestellt. Es ist jedoch auch denkbar, dass die bewegbaren Elemente separate Elemente sind, die mit der Oberfläche des Trägerelementes verbunden werden. Beispielswiese sind die bewegbaren Strukturen in Form von künstlichen Zilien ausgebildet, die insbesondere nach Art von biologischen motilen Zilien ausgeformt sind und die oben erwähnte asymmetrische Biegesteifigkeit aufweisen. Als Material für künstliche Zilien kann zum Beispiel ein mehrschichtiges Materialsystem, das z.B. eine Kunststoffschicht und eine Metallschicht umfasst, verwendet werden; beispielsweise ein Schichtsystem mit einer Polyimid- und einer Metallschicht. Möglichkeiten der Herstellung künstlicher Zilien sind zum Beispiel in den folgenden Artikeln beschrieben: "Artificial cilia for active micro-fluidic mixing", J.D. den Toonder et. al., Lab on a Chip, Volume 8, Nr. 4, S. 501-632, "Printed artificial cilia from liquid-crystal network actuators modularly driven by light", C. L. van Oosten, Nature Materials, Vol. 8, August 2009, S. 677 sowie "MEMS based hair flow-sensors as model systems for acoustic perception studies", G. J M Krijnen, Nanotechnology 17 (2006), S. 84 - 89. Auf diese Artikel wird hinsichtlich der Herstellung der künstlichen Zilien ausdrücklich Bezug genommen.

Insbesondere besitzen die bewegbaren Strukturen eine Ausdehnung parallel zur Trägerelementoberfläche und in Ausbreitungsrichtung der akustischen Oberflächenwellen, die über den Transmitter in dem Trägerelement angeregt werden können, die klein ist gegenüber der Wellenlänge der akustischen Wellen. Beispielsweise beträgt diese Ausdehnung der bewegbaren Strukturen höchstens ein Zehntel der Wellenlänge der akustischen Oberflächenwellen.

Durch die relativ geringe Ausdehnung der bewegbaren Strukturen werden die sich entlang des Trägerelementes ausbreitenden Oberflächenwellen möglichst wenig beeinflusst. Beispielsweise besitzen die bewegbaren Strukturen eine Ausdehnung parallel zur Trägerelementoberfläche und in Ausbreitungsrichtung der Oberflächenwellen, die zehn Mikrometer, insbesondere 300 nm, nicht übersteigt. Beispielsweise weisen die bewegbaren Strukturen einen zumindest näherungsweise kreisförmigen Querschnitt auf, dessen Durchmesser entsprechend klein gegenüber der Wellenlänge der akustischen Oberflächenwellen ist.

Die bewegbaren Strukturen dehnen sich entlang der Trägerelementoberfläche somit möglichst wenig aus, sollen jedoch eine möglichst große Ausdehnung in das Medium hinein aufweisen. Hierfür besitzen die bewegbaren Strukturen zum Beispiel eine Ausdehnung senkrecht zur Trägerelementoberfläche (bezogen auf den Ruhezustand des Trägerelementes), die mindestens das Zehnfache oder mindestens das Hundertfache ihrer Ausdehnung parallel zur Trägerelementoberfläche beträgt. Beispielsweise weisen die bewegbaren Strukturen eine Ausdehnung senkrecht zur Trägerelementoberfläche auf, die mindestens 100 [µm beträgt.

Gemäß einer anderen Ausgestaltung der Erfindung ist das Trägerelement mit einem zu bewegenden Objekt verbunden, das somit durch Anregen von Oberflächenwellen im Trägerelement in Bewegung versetzbar ist. Beispielsweise handelt es sich bei dem mit dem Trägerelement verbundenen Objekt um einen schwimmfähigen Körper, der über das Anregen akustischer Oberflächenwellen und der resultierenden Bewegung der bewegbaren Strukturen in Bewegung versetzt werden kann.

Gemäß einer anderen Ausgestaltung der Erfindung ist der Transmitter an einer den bewegbaren Strukturen abgewandten Seite des Trägerelementes angeordnet. Beispielsweise handelt es sich bei dem Trägerelement, wie oben bereits angedeutet, um einen plattenförmigen Körper (Substrat). Eine derartige Geometrie des Trägerelements ist jedoch nicht zwingend, sondern es kann sich bei dem Trägerelement um einen im Prinzip beliebig gestalteten Körper handeln, in dem Oberflächenwellen erzeugbar sind; zum Beispiel kann das Trägerelement auch als Hohlkörper (insbesondere in Form eines Hohlzylinders) ausgebildet sein, wobei die bewegbaren Strukturen an einer Innenseite des Hohlkörpers angeordnet sind und der Transmitter zum Beispiel an seiner Außenseite.

Es ist auch nicht zwingend erforderlich, dass der Transmitter an einer den bewegbaren Strukturen abgewandten Seite des Trägerelementes angeordnet ist. Es ist auch möglich, dass der Transmitter auf derselben Seite wie die bewegbaren Strukturen an dem Trägerelement angeordnet ist. Darüber hinaus ist denkbar, dass mehr als ein Transmitter verwendet wird.

Beispielsweise handelt es sich bei dem Transmitter um einen piezoelektrischen Interdigitalwandler, der z.B. stoffschlüssig mit dem Trägerelement verbunden ist, z.B. an diesem angeklebt ist, wobei die Erfindung natürlich nicht auf die Verwendung dieses Transmittertyps beschränkt ist. Das Trägerelement ist insbesondere aus einem nicht piezoelektrischen Material gebildet. Beispielsweise besteht das Trägerelement aus Glas, Metall, Keramik und/oder Kunststoff. Mögliche Ausgestaltungen des Trägerelementes und des am Trägerelement angeordneten Transmitters sind beispielsweise der internationalen Patentanmeldung WO 2010/034715 zu entnehmen, auf die in diesem Zusammenhang ausdrücklich Bezug genommen wird.

Die erfindungsgemäße Vorrichtung kann zum Beispiel dazu dienen, Suspensionen (insbesondere Polymer-Suspensionen) zu transportieren, wobei die Vorrichtung insbesondere ein Trägerelement in Form eines Rohres aufweisen kann, das an seiner Innenseite die bewegbaren Strukturen aufweist. Die an der Rohrinnenseite vorhandenen bewegbaren Strukturen (insbesondere in Form von Zilien) wirken z.B. einer Ablagerung von Suspensionspartikeln (wie zum Beispiel Teflon) an der Innenwand des Rohres entgegen.

Grundsätzlich ist denkbar, dass, wenn als Trägerelement eine Leitung (d.h. ein hohlzylindrisches Element) zum Durchleiten des Mediums verwendet wird, die an der Innenseite der Leitung angeordneten bewegbaren Strukturen dazu beitragen, dass eine Bildung eines unerwünschten Materialfilms an der Innenseite der Leitung vermieden bzw. zumindest reduziert wird.

Des Weiteren kann die erfindungsgemäße Vorrichtung Bestandteil einer Pumpe (zum Beispiel einer Mikropumpe) sein. Beispielsweise kann die Vorrichtung auch genutzt werden, um, wie oben bereits erwähnt, Gas zu fördern, so dass z.B. eine Verwendung als Flüstergebläse (insbesondere eines Kompressors) in Betracht kommt.

Des Weiteren ist möglich, dass die erfindungsgemäße Vorrichtung im Rahmen eines Verfahrens zum Trennen von Partikelgemischen nach bestimmten Partikeleigenschaften verwendet wird, beispielsweise im Rahmen eines Trennverfahrens für Gemische mikroskopisch kleiner Partikel insbesondere unterschiedlicher Masse in fluiden Mikrosystemen.

Die Erfindung wird im Folgenden anhand von Ausführungsbeispielen unter Bezugnahme auf die Figuren näher erläutert. Es zeigen:

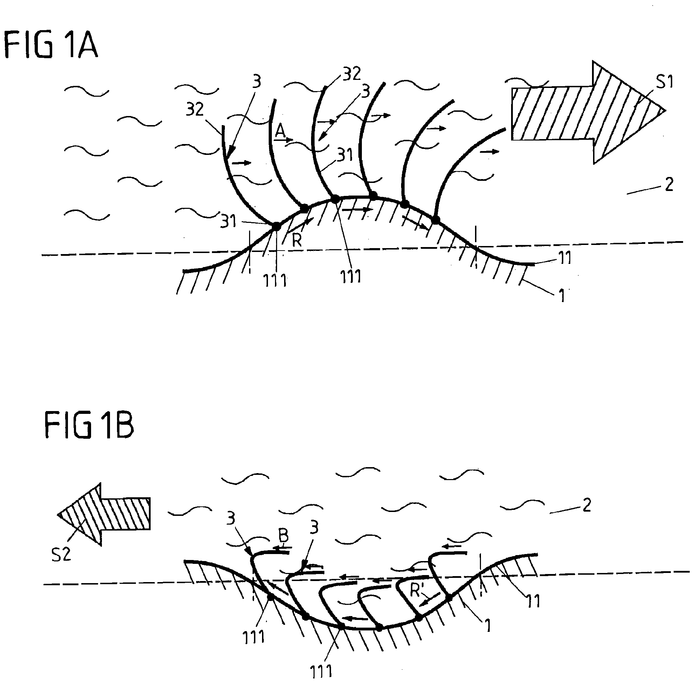

- Fig. 1A: ein Ausführungsbeispiel einer erfindungsgemäßen Vorrichtung zu einem ersten Zeitpunkt; und
- Fig. 1B: die Vorrichtung aus Fig. 1A zu einem zweiten Zeitpunkt.

Die Figuren 1A und 1B, die jeweils schematisch eine Vorrichtung gemäß einem Ausführungsbeispiel der Erfindung zeigen, illustrieren das Funktionsprinzip der Vorrichtung, wobei die Figuren 1A und 1B die Vorrichtung im Betrieb und zu unterschiedlichen Zeitpunkten zeigen.

Die erfindungsgemäße Vorrichtung weist in diesem Ausführungsbeispiel ein Trägerelement in Form eines Substrats 1 auf, das mit einer Oberfläche 11 in Kontakt mit einem Medium in Form einer Flüssigkeit 2 steht. Die Substratoberfläche 11 erstreckt sich im Ruhezustand (durch eine gestrichelte Linie angedeutet) des Substrats 1 im Wesentlichen plan. Das nachfolgend erläuterte Prinzip ist jedoch analog auch auf andere Trägerelementgeometrien (z.B. eine hohlzylindrische Form) übertragbar.

An der Substratoberfläche 11 ist eine Mehrzahl von bewegbaren Strukturen in Form von künstlichen Zilien 3 angeordnet. Die künstlichen Zilien 3 besitzen eine längliche Form, wobei sie mit einem ersten Ende 31 an der Subratoberfläche 11 festgelegt sind und mit einem zweiten, freien Ende 32 in die Flüssigkeit 2 hineinragen.

An dem Substrat 1 ist des Weiteren ein Transmitter (nicht dargestellt) angeordnet, mit dem akustische Oberflächenwellen in dem Substrat 1 angeregt werden können. Durch Anregung von Oberflächenwellen in dem Substrat 1 kommt es zu einer Auslenkung der Substratoberfläche 11 abwechselnd zum Medium 2 hin (Figur 1A) und vom Medium 2 weg (Figur 1B). Insbesondere führt die Substratoberfläche 11 eine elliptische retrograde Bewegung (angedeutet durch Pfeile R, R') aus, so dass Abschnitte 111 der Substratoberfläche 11, an denen die Enden 31 der Zilien 3 festgelegt sind, jeweils sowohl eine transversale Auf- und Ab-Bewegung (senkrecht zur Substratoberfläche 11 in Ruhelage) als auch eine longitudinale Hin- und Her-Bewegung parallel zur Substratoberfläche 11 (bezogen auf deren Ruhelage) ausführen.

Somit erfahren die Abschnitte 111 und damit die Zilien 3 eine periodische longitudinale Bewegung mit einer zur Substratoberfläche parallelen (bezogen auf deren Ruhelage) Komponente, die abwechselnd in eine erste Richtung A und in eine zur ersten Richtung A entgegengesetzte zweite Richtung B gerichtet ist.

Die Zilien 3 sind nun so beschaffen und an der Substratoberfläche 11 angeordnet, dass sie sich bei einer Bewegung mit einer Komponente in der ersten Richtung A so verformen, dass ihr Strömungswiderstand zunimmt; vgl. Fig. 1A, die die Bewegung der Zilien während einer ersten Halbperiode der Oberflächenwellen zeigt. Insbesondere erfahren die Zilien 3 bei einer derartigen Bewegung eine Vergrößerung ihrer Ausdehnung senkrecht zur Substratoberfläche 11 in Ruhelage, d.h. sie strecken sich, wodurch sich ihr Strömungswiderstand vergrößert. Umgekehrt krümmen sich die Zilien 3 bei einer Bewegung mit der entgegengesetzt gerichteten Komponente B ein, so dass sich ihr Strömungswiderstand verringert; vgl. Figur 1B, die die Bewegung der Zilien 3 während einer zweiten Halbperiode der Oberflächenwellen zeigt.

Aufgrund dieser asymmetrischen Verformung übertragen die Zilien 3 bei einer Bewegung mit einer Komponente in der ersten Richtung A (d.h. während der ersten Halbperiode der Oberflächenwellen) eine größere Kraft (einen größeren Impuls) auf das Medium 2 und bewegen ein größeres Volumen des Mediums 2 als bei einer Bewegung mit einer Komponente in der entgegengesetzten Richtung B (d.h. während der zweiten Halbperiode der Oberflächenwellen). Somit entsteht bei der Bewegung der Zilien 3 mit einer Komponente in der ersten Richtung A eine stärkere Strömung S1 in der ersten Richtung als bei der entgegengesetzten Bewegung (Pfeil S2) der Zilien 3, so dass über die Anregung von akustischen Oberflächenwellen in dem Substrat 1 eine Effektivströmung in der ersten Richtung A erzeugt wird.

Die Zilien 3 weisen insbesondere unterschiedliche Biegesteifigkeiten bei Belastung in der ersten bzw. der zweiten Richtung A, B auf, die die asymmetrische Verformung der Zilien 3 bewirkt. Beispielsweise werden diese unterschiedliche Biegesteifigkeiten dadurch realisiert, dass die Zilien 3 - bezogen auf den Ruhezustand des Substrats 1 - gekrümmt ausgebildet sind, wobei die Krümmung so verläuft, dass eine vom Medium 2 bei Bewegung der Zilien 3 mit einer Komponente in der ersten Richtung A ausgeübte (entgegengesetzt gerichtete) Gegenkraft zu einem Aufbiegen der Zilien 3 führt. Umgekehrt führt eine vom Medium 2 bei Bewegung der Zilien 3 mit einer Komponente in der zweiten Richtung B ausgeübte Gegenkraft zu dem Einkrümmen der Zilien 3.

Es ist auch denkbar, dass das Substrat 2 (zum Beispiel einstückig) mit einem (zum Beispiel schwimmfähigen) Objekt (nicht dargestellt) verbunden ist, wobei der größere Impulsübertrag auf das Medium 2 in der ersten Richtung A als Antrieb für dieses Objekt genutzt werden kann.

### Bezugszeichenliste

- 1: Substrat
- 2: Flüssigkeit
- 3: Zilie
- 11: Substratoberfläche
- 31: erstes Ende
- 32: zweites Ende
- 111: Abschnitt
- A: erste Richtung
- B: zweite Richtung
- S1: erste Strömung
- S2: zweite Strömung

## Patentansprüche

1. Vorrichtung zum Erzeugen und/oder Nachweisen einer Strömung in einem Medium, mit
- einem Trägerelement (1), das in Kontakt mit dem Medium (2) bringbar ist;
- einer Mehrzahl von bewegbaren Strukturen (3), die an einer Oberfläche (11) des Trägerelements (1) angeordnet sind, wobei das Trägerelement (1) so in Bezug auf das Medium (2) anzuordnen ist, dass die bewegbaren Strukturen (3) in das Medium (2) hineinragen; und
- einem Transmitter zum Erzeugen von akustischen Oberflächenwellen in dem Trägerelement (1), wobei in dem Trägerelement (1) angeregte Oberflächenwellen die Trägerelementoberfläche (11), an der die bewegbaren Strukturen (3) angeordnet sind, und somit auch die bewegbaren Strukturen (3) abwechselnd in eine Bewegung mit einer Komponente in einer ersten Richtung (A) und in eine Bewegung mit einer Komponente in einer zur ersten Richtung (A) entgegengesetzten zweiten Richtung (B) versetzen,
**dadurch gekennzeichnet, dass**
die bewegbaren Strukturen (3) - bezogen auf den Ruhezustand des Trägerelementes (1) - gekrümmt und/oder vorgespannt ausgebildet und so beschaffen und an der Trägerelementoberfläche (11) angeordnet sind, dass sie sich aufgrund einer auf sie vom Medium (2) bei einer Bewegung mit einer Komponente in der ersten Richtung (A) ausgeübten Gegenkraft strecken, so dass sich ihr Strömungswiderstand vergrößert, und sie sich aufgrund einer auf sie vom Medium (2) bei einer Bewegung mit einer Komponente in der entgegengesetzten zweiten Richtung (B) auf sie wirkenden Gegenkraft einkrümmen, so dass sich ihr Strömungswiderstand verkleinert, wobei die bewegbaren Strukturen (3) in Bezug auf eine vom Medium bei einer Bewegung der bewegbaren Strukturen (3) mit einer Komponente in der ersten Richtung (A) ausgeübte Gegenkraft eine höhere Biegesteifigkeit aufweisen als in Bezug auf eine vom Medium (2) bei einer Bewegung der bewegbaren Strukturen (3) mit einer Komponente in der zweiten Richtung (B) ausgeübte Gegenkraft.

2. Vorrichtung nach Anspruch 1, **dadurch gekennzeichnet, dass** die Abschnitte (111) der Trägerelementoberfläche (11), an denen die bewegbaren Strukturen (3) angeordnet sind, durch in dem Trägerelement (1) angeregte Oberflächenwellen eine elliptische retrograde Bewegung ausführen, wobei die Komponenten der Bewegung der Abschnitte (111) der Trägerelementoberfläche (11) und somit der bewegbaren Strukturen (3) in der ersten und in der zweiten Richtung (A, B) parallel zur Trägerelementoberfläche (11) und zueinander entgegengesetzt gerichtete Komponenten der retrograden Bewegung sind.

3. Vorrichtung nach einem der vorhergehende Ansprüche, **dadurch gekennzeichnet, dass** die bewegbaren Strukturen (3) durch in dem Trägerelement (1) angeregte akustische Wellen so in Bewegung versetzbar sind, dass sie jeweils abwechselnd eine erste Kraft mit einer parallel zur Trägerelementoberfläche (11) gerichteten ersten Komponente und eine zweite Kraft mit einer parallel zur Trägerelementoberfläche (11), aber entgegengesetzt gerichteten zweiten Komponente auf das Medium (2) übertragen.

4. Vorrichtung nach Anspruch 3, **dadurch gekennzeichnet, dass** - die erste Kraft auf das Medium (2) übertragen wird, wenn die Abschnitte (111) der Trägerelementoberfläche (11), an denen die bewegbaren Strukturen (3) angeordnet sind, jeweils durch in dem Trägerelement (1) angeregte akustische Oberflächenwellen zum Medium (2) hin oder vom Medium (2) weg ausgelenkt werden, und - die zweite Kraft auf das Medium (2) übertragen wird, wenn diese Abschnitte (111) der Trägerelementoberfläche (11) umgekehrt vom Medium weg (2) oder zum Medium (2) hin ausgelenkt werden.

5. Vorrichtung nach einem der vorhergehenden Ansprüche, **dadurch gekennzeichnet, dass** die bewegbaren Strukturen (3) länglich ausgebildet und jeweils mit einem Ende (31) an der Oberfläche (11) des Trägerelements (1) festgelegt sind.

6. Vorrichtung nach einem der vorhergehenden Ansprüche, **dadurch gekennzeichnet, dass** die bewegbaren Strukturen (3) in Form von künstlichen Zilien ausgebildet sind.

7. Vorrichtung nach einem der vorhergehenden Ansprüche, **dadurch gekennzeichnet, dass** die bewegbaren Strukturen (3) eine Ausdehnung parallel zur Trägerelementoberfläche (11) besitzen, die höchstens ein Zehntel der Wellenlänge der über den Transmitter in dem Trägerelement (1) anregbaren akustischen Wellen beträgt.

8. Vorrichtung nach einem der vorhergehenden Ansprüche, **dadurch gekennzeichnet, dass** die bewegbaren Strukturen (3) eine Ausdehnung senkrecht zur Trägerelementoberfläche (11) besitzen, die mindestens das Zehnfache oder mindestens das Hundertfache ihrer Ausdehnung parallel zur Trägerelementoberfläche (11) beträgt.

9. Vorrichtung nach einem der vorhergehenden Ansprüche, **dadurch gekennzeichnet, dass** der Transmitter an einer den bewegbaren Strukturen (3) abgewandten Seite des Trägerelementes (1) angeordnet ist.

10. Vorrichtung nach einem der vorhergehenden Ansprüche, **dadurch gekennzeichnet, dass** das Trägerelement (1) mit einem zu bewegenden Objekt verbindbar ist, das somit durch Anregen von Oberflächenwellen in dem Trägerelement (1) in Bewegung versetzbar ist.

## Claims

1. A device for generating and/or detecting a flow in a medium, comprising
- a carrier element (1) which can be brought in contact with the medium (2);
- a plurality of movable structures (3) which are arranged on a surface (11) of the carrier element (1), wherein the carrier element (1) is to be arranged with respect to the medium (2) such that the movable structures (3) protrude into the medium (2); and
- a transmitter for generating acoustic surface waves in the carrier element (1), wherein surface waves induced in the carrier element (1) alternately put the carrier element surface (11) on which the movable structures (3) are arranged, and thus also the movable structures (3), into a movement with a component in a first direction (A) and into a movement with a component in a second direction (B) opposite to the first direction (A),
**characterized in that**
the movable structures (3) - based on the rest condition of the carrier element (1) - are formed curved and/or pretensioned and are designed and arranged on the carrier element surface (11) such that they stretch due to a counterforce exerted on them by the medium (2) during a movement with a component in the first direction (A), so that their flow resistance is increased, and they curve in due to a counterforce acting on them from the medium (2) during a movement with a component in the opposite second direction (B), so that their flow resistance is reduced, wherein with respect to a counterforce exerted by the medium during a movement of the movable structures (3) with a component in the first direction (A) the movable structures (3) have a higher bending stiffness than with respect to a counterforce exerted by the medium (2) during a movement of the movable structures (3) with a component in the second direction (B).

2. The device according to claim 1, **characterized in that** the portions (111) of the carrier element surface (11) on which the movable structures (3) are arranged carry out an elliptical retrograde movement due to surface waves induced in the carrier element (1), wherein the components of the movement of the portions (111) of the carrier element surface (11) and thus of the movable structures (3) in the first and in the second direction (A, B) are components of the retrograde movement directed parallel to the carrier element surface (11) and opposite to each other.

3. The device according to any of the preceding claims, **characterized in that** the movable structures (3) can be put into movement by acoustic waves induced in the carrier element (1) such that they each alternately transmit a first force with a first component directed parallel to the carrier element surface (11) and a second force with a second component directed parallel to the carrier element surface (11), but in opposite direction, to the medium (2).

4. The device according to claim 3, **characterized in that** the first force is transmitted to the medium (2) when the portions (111) of the carrier element surface (11) on which the movable structures (3) are arranged each are deflected towards the medium (2) or away from the medium (2) by acoustic surface waves induced in the carrier element (1), and the second force is transmitted to the medium (2) when these portions (111) of the carrier element surface (11) conversely are deflected away from the medium (2) or towards the medium (2).

5. The device according to any of the preceding claims, **characterized in that** the movable structures (3) are oblong in shape and with one end (31) each are fixed to the surface (11) of the carrier element (1).

6. The device according to any of the preceding claims, **characterized in that** the movable structures (3) are configured in the form of artificial cilia.

7. The device according to any of the preceding claims, **characterized in that** the movable structures (3) have an extension parallel to the carrier element surface (11) which at most is one tenth of the wavelength of the acoustic waves to be induced in the carrier element (1) via the transmitter.

8. The device according to any of the preceding claims, **characterized in that** the movable structures (3) have an extension perpendicular to carrier element surface (11) which is at least ten times or at least one hundred times the extension parallel to the carrier element surface (11).

9. The device according to any of the preceding claims, **characterized in that** the transmitter is arranged on a side of the carrier element (1) facing away from the movable structures (3).

10. The device according to any of the preceding claims, **characterized in that** the carrier element (1) is connectable to an object to be moved, which thus can be put into movement by inducing surface waves in the carrier element (1).

## Revendications

1. Dispositif pour la génération et/ou la détection d'un courant dans un milieu, avec
- un élément porteur (1) qui peut être amené en contact avec le milieu (2) ;
- une pluralité de structures mobiles (3) qui sont disposées sur une surface (11) de l'élément porteur (1), dans lequel l'élément porteur (1) doit être disposé par rapport au milieu (2) de sorte que les structures mobiles (3) pénètrent dans le milieu (2) ; et
- un émetteur pour la génération d'ondes de surface acoustiques dans l'élément porteur (1), dans lequel des ondes de surface excitées dans l'élément porteur (1) déplacent la surface d'élément porteur (11) sur laquelle les structures mobiles (3) sont disposées, et ainsi aussi les structures mobiles (3) alternativement en un mouvement avec une composante dans un premier sens (A) et en un mouvement avec une composante dans un second sens (B) opposé au premier sens (A), **caractérisé en ce que**
les structures mobiles (3) sont réalisées courbées et/ou précontraintes par rapport à l'état de repos de l'élément porteur (1) et sont de nature et disposées sur la surface d'élément porteur (11) de sorte qu'elles s'étirent en raison d'une force antagoniste exercée sur elles par le milieu (2) lors d'un mouvement avec une composante dans le premier sens (A) de sorte que leur résistance à l'écoulement augmente, et elles se courbent en raison d'une force antagoniste agissant sur elles par le milieu (2) lors d'un mouvement avec une composante dans le second sens opposé (B) de sorte que leur résistance à l'écoulement se réduise, dans lequel les structures mobiles (3) présentent par rapport à une force antagoniste exercée par le milieu lors d'un mouvement des structures mobiles (3) avec une composante dans le premier sens (A) une rigidité à la flexion plus grande que par rapport à une force antagoniste exercée par le milieu (2) lors d'un mouvement des structures mobiles (3) avec une composante dans le second sens (B).

2. Dispositif selon la revendication 1, **caractérisé en ce que** les sections (111) de la surface d'élément porteur (11) sur lesquelles les structures mobiles (3) sont disposées réalisent par des ondes de surface excitées dans l'élément porteur (1) un mouvement rétrograde elliptique, dans lequel les composantes du mouvement des sections (111) de la surface d'élément porteur (11) et ainsi des structures mobiles (3) dans le premier et dans le second sens (A, B) sont parallèles à la surface d'élément porteur (11) et sont des composantes dirigées à l'opposé l'une de l'autre du mouvement rétrograde.

3. Dispositif selon l'une quelconque des revendications précédentes, **caractérisé en ce que** les structures mobiles (3) peuvent être amenées en mouvement par des ondes acoustiques excitées dans l'élément porteur (1) de sorte qu'elles transmettent respectivement alternativement une première force avec une première composante dirigée parallèlement à la surface d'élément porteur (11) et une seconde force avec une seconde composante dirigée parallèlement à la surface d'élément porteur (11) mais dirigée à l'opposé sur le milieu (2).

4. Dispositif selon la revendication 3, **caractérisé en ce que** la première force est transmise au milieu (2) lorsque les sections (111) de la surface d'élément porteur (11) sur lesquelles les structures mobiles (3) sont disposées, sont déviées respectivement par des ondes de surface acoustiques excitées dans l'élément porteur (1) vers le milieu (2) ou loin du milieu (2), et la seconde force est transmise au milieu (2) lorsque ces sections (111) de la surface d'élément porteur (11) sont déviées inversement loin du milieu (2) ou vers le milieu (2).

5. Dispositif selon l'une quelconque des revendications précédentes, **caractérisé en ce que** les structures mobiles (3) sont réalisées de manière oblongue et sont fixées respectivement à une extrémité (31) à la surface (11) de l'élément porteur (1).

6. Dispositif selon l'une quelconque des revendications précédentes, **caractérisé en ce que** les structures mobiles (3) sont réalisées sous la forme de cils artificiels.

7. Dispositif selon l'une quelconque des revendications précédentes, **caractérisé en ce que** les structures mobiles (3) possèdent une extension parallèle à la surface d'élément porteur (11) qui s'élève au maximum à un dixième de la longueur d'onde des ondes acoustiques excitables par le biais de l'émetteur dans l'élément porteur (1).

8. Dispositif selon l'une quelconque des revendications précédentes, **caractérisé en ce que** les structures mobiles (3) possèdent une extension perpendiculairement à la surface d'élément porteur (11) qui s'élève au moins au dixième ou au moins au centième de leur extension parallèlement à la surface d'élément porteur (11).

9. Dispositif selon l'une quelconque des revendications précédentes, **caractérisé en ce que** l'émetteur est disposé sur un côté éloigné des structures mobiles (3) de l'élément porteur (1).

10. Dispositif selon l'une quelconque des revendications précédentes, **caractérisé en ce que** l'élément porteur (1) peut être raccordé à un objet à déplacer qui peut être amené en mouvement ainsi par excitation d'ondes de surface dans l'élément porteur (1).
